# EUROPÄISCHE PATENTANMELDUNG

(11) **EP 1 237 080 A1**
(43) Veröffentlichungstag der Anmeldung: **04.09.2002**
(21) Anmeldenummer: 01105177.8
(22) Anmeldetag: 02.03.2001
(51) Int. Cl.: G06F 9/46, G06F 11/14

(54) **Überprüfung eines Computersystems auf gesperrte Speicherbereiche nach einem Abbruch eines Prozesses**

(71) Anmelder: SIEMENS AKTIENGESELLSCHAFT, 80333 München (DE)
(72) Erfinder: Frisch, Norbert, 82152 Martinsried (DE)

(57) **Zusammenfassung**

Überprüfung eines Computersystems auf gesperrte Speicherbereiche nach einem Abbruch eines Prozesses.

Die Erfindung betrifft ein Verfahren und eine Vorrichtung zur Überprüfung eines Computersystems auf gesperrte bzw. fehlallokierte Speicherbereiche, die durch einen Abbruch eines Prozesses,der neben weiteren Prozessen auf den Speicher zugreift, entstanden sein können. Dies wird überprüft, indem ein erster Zustandsvektor vor dem Start des Prozesses und ein zweiter Zustandsvektor erfaßt wird, der den Zustand des Speichers nach dem Abbruch beschreibt. Beide Zustandsvektoren werden daraufhin auf Übereinstimmung verglichen.

## Beschreibung

Die Erfindung liegt auf dem Gebiet der Rechnersysteme und befaßt sich mit der Zuteilbarkeit von Betriebsmitteln, insbesondere von Speicher Ressourcen, nach einem Abbruch eines Prozesses.

Die Erfindung betrifft insbesondere ein Verfahren zur Überprüfung der frei zuteilbaren bzw. frei verfügbaren Betriebsmitteln, auf die mehrere Prozesse zugreifen, nach einem Abbruch eines Prozesses und gegebenenfalls zur Wiederherstellung eines initialen Zustandes der Betriebsmittel vor dem Abbruch.

Ein Computersystem verfügt über mehrere Betriebsmittel, auf die jeweils mehrere Prozesse zugreifen können. Betriebsmittel sind beispielsweise: Speicher, Rechnerkern, Bandbreite eines Datenübertragungskanals, periphere Geräte, Dateien etc. Die Prozesse konkurrieren um gemeinsame Betriebsmittel. Deshalb unterliegt der Zugriff auf diese Betriebsmittel bestimmten Einschränkungen. Um einen möglichst optimalen Ablauf der Prozesse zu gewährleisten, muß sicher gestellt sein, daß zu jedem Zeitpunkt ein möglichst großer Bereich eines Betriebsmittels - z.B. eines Speichers - frei verfügbar bzw. einem Prozeß zuteilbar ist.

Laufen auf einem System verschiedene Applikationen, kann es zu einem Crash einer dieser Applikationen kommen. Da ein Prozeß bzw. eine Applikation nahezu immer auf bestimmte Betriebsmittel, insbesondere auf Speicherressourcen, zugreift, kann es bei einem unbeabsichtigten Abbruch der Applikation passieren, daß die Ressourcen trotz Unterbrechung bzw. Stillstand des Prozesses dennoch belegt bleiben und deshalb für die weiteren Prozesse nicht weiter verfügbar sind. Dies verringert die Leistungsfähigkeit des Systems und kann, insbesondere bei einer Kumulation dieser Ereignisse, zu erheblichen Einschränkungen bis zu einem Stillstand des Gesamtsystems führen.

Bisher wurde nach einem Absturz eines Applikationsprozesses immer das gesamte System neu gebootet, um sicher stellen zu können, daß das Betriebssystem die Betriebsmittel wieder auf ihren initialen Zustand zurücksetzt, insbesondere, daß die Speicherbereiche wieder frei gegeben werden.

Diese Vorgehen erweist sich aus mehreren Gründen als nachteilig. Zum einen ist es sehr zeitaufwendig, da alle weiteren Prozesse beendet werden müssen und abgewartet werden muß, bis das Betriebssystem neu bootet. Zum anderen müssen Prozesse angehalten werden, die beispielsweise zeitkritisch sind und eine Unterbrechung nur mit Fehlern erlauben. Des weiteren war es bislang nicht möglich, Informationen darüber zu erhalten, ob überhaupt gesperrte Speicherbereiche durch den Absturz der Applikation entstanden sind. Denn in den Fällen, in denen keine gesperrten bzw. gelockten Speicherbereiche entstanden sind, ist es ausreichend, nur die Applikation neu zu starten. Dafür müssen aber die gemeinsamen Betriebsmittel auf ihre Verfügbarkeit hin untersucht werden.

Wurde bisher nach einem Abbruch einer Applikationssoftware nicht das gesamte System gebootet, dann bestand das Risiko, daß durch den Absturz Systemressourcen verloren gegangen sind, daß beispielsweise ein für die Applikation allokierter, gesperrter Speicherbereich existiert, der aber nach dem Absturz der Software nicht mehr genutzt werden kann. Dies kann unter anderem bei einer Speicher Allokation, die zur Laufzeit eines Programmes ausgeführt wird, erfolgen, etwa indem Daten unerreichbar werden, wenn kein Zeiger mehr auf sie verweist. Dies kann in Folge dazu führen, daß immer weniger frei verfügbarer Speicherplatz zur Verfügung steht und schlechtestenfalls die Grenzen des virtuellen Speichers überstiegen werden. Wird dieses Ressourcenproblem nicht behoben, kann es zu schweren Folgefehlern kommen.

Aus der US 6097393 ist ein Verfahren bekannt, das ebenfalls auf dem Gebiet des Ressourcen-Managements liegt. Hier ist ein Verfahren offenbart, das auf einer dreidimensionalen Darstellung der Ressourcen basiert, die einem Anwender die Navigation und das Management der Ressourcen erleichtern soll. Dieses Verfahren bezieht sich aber auf den fehlerfreien Ablauf des Systems und macht keine Vorschläge für das Vorgehen bei fehlallokierten Speicherressourcen, die aufgrund eines Abbruchs eines Prozesses entstanden sind.

Aufgabe der vorliegenden Erfindung ist es daher, ein Verfahren zur Verfügung zu stellen, das nach einem Abbruch bzw. einem Crash zumindest eines Prozesses den Zustand der Betriebsmittel, insbesondere des Speichers, automatisch erfaßt und analysiert, ob ein Starten des Prozesses ausreichend ist, um den Zustand der Betriebsmittel in den Zustand zu transformieren, der vor dem Crash bestanden hat.

Eine weitere Aufgabe liegt darin, das System nach einem Abbruch zumindest eines Prozesses effizient und automatisch in einen Zustand zu überführen, in dem alle Betriebsmittel so verfügbar sind, wie sie es vor dem Abbruch waren, insbesondere frei verfügbar sind.

Diese Aufgabe wird erfindungsgemäß durch das eingangs erwähnte Verfahren gelöst, insbesondere durch ein Verfahren zur Ermittlung einer Zuteilbarkeit von zumindest einem Betriebsmittel eines Computersystems nach Stillstand zumindest eines Prozesses, der auf das Betriebsmittel des Systems zugreift mit folgenden Schritten:
- Ermitteln eines ersten Zustandsvektors des Betriebsmittels vor Inbetriebnahme des Prozesses
- Ermitteln eines zweiten Zustandsvektors des Betriebsmittels nach dem Stillstand des Prozesses,
- Ermittlung, ob durch den Stillstand des Prozesses alle Betriebsmittel verfügbar und zuteilbar geblieben sind, indem die beiden Zustandsvektoren auf Übereinstimmung verglichen werden.

Diese Aufgabe wird weiterhin gemäß Anspruch 12 durch die Verwendung des Verfahrens zur automatischen Entsperrung der Betriebsmittel nach dem Abbruch des Prozesses gelöst, indem bei Übereinstimmung der beiden Zustandsvektoren der Prozeß neu gebootet wird und andernfalls zumindest ein Mechanismus zur Entsperrung bzw. Wiederherstellung der Betriebsmittel gestartet wird.

Nach einer Aufgabenlösung gemäß Anspruch 14 ist ein Computersystem vorgesehen, das zur Ausführung des Verfahrens bestimmt ist und das eine Betriebsmittel-Check-Einrichtung umfaßt, die jeweils einen Zustand der Betriebsmittel vor und nach einem Abbruch eines Prozesses ermittelt und erfaßt, ob durch den Abbruch nicht zuteilbare Betriebsmittel entstanden sind, indem der Zustand nach dem Abbruch mit dem Zustand vor dem Abbruch auf Abweichungen verglichen wird.

Die bevorzugte Ausführungsform der Erfindung bezieht sich auf einen Mechanismus zur Erkennung von frei zuteilbaren und gesperrten Speicher Ressourcen, auf den ein Benutzerprozeß bzw. eine Applikation zugreift. Falls die Applikation bestimmte Speicherbereiche allokiert hat und aufgrund eines Fehlers abgestürzt ist, besteht nach diesem unvorhergesehenen Beenden der Software das Risiko, daß die allokierten Speicherbereiche nicht mehr frei gegeben worden sind. Da das Betriebsmittel (Speicher) eine gemeinsame Systemressource ist, auf die noch andere Prozesse zugreifen, kann diese Systemressource nicht weiterhin frei verfügbar bleiben und kann somit für noch laufende Anwendungen nicht genutzt werden. Tritt eine Kumulation solcher Fehl-Allokationen auf, dann führt dies zu schwerwiegenden Effizienzeinbußen des Gesamtsystems und zu einer erhöhten Wahrscheinlichkeit von Fehlern.

Damit solche Fehl-Allokationen erkannt werden können, sieht die Erfindung einen Erkennungsmechanismus vor, der einen ersten Zustand der Betriebsmittel vor dem Applikationscrash (Zeitpunkt t1) mit einem zweiten Zustand der Betriebsmittel nach diesem Crash (Zeitpunkt t2) vergleicht. Basierend auf diesem Vergleich werden Rückschlüsse auf gelockte bzw. gesperrte Speicherbereiche gezogen.

Aufgrund der Aussage, ob gesperrte Speicherbereiche durch den Absturz entstanden sind oder nicht, wird das weitere Vorgehen selektiert: Sind gesperrte Speicherbereiche vorhanden, so muß ein weiterer Mechanismus aktiviert werden, der diese gesperrten Bereiche wieder frei verfügbar macht. Dies kann durch Algorithmen bzw. Programme ausgeführt werden, die beispielsweise unter dem Begriff der sogenannten Garbage Collection bekannt sind. Alternativ kann in diesem Fall ein Neubooten des gesamten Systems notwendig sein. Da dieses Vorgehen jedoch sehr zeitintensiv ist, wird es erfindungsgemäß möglichst vermieden. Andernfalls, wenn also keine gesperrten Speicherbereiche vorhanden sind und somit der Zustand des Speichers vor dem Absturz mit dem Zustand nach dem Absturz übereinstimmt, ist es - ohne hinsichtlich der Betriebsmittel ein Risiko einzugehen - ausreichend, nur die Applikation neu zu starten.

Zur Ermittlung des Systemzustandes hinsichtlich der Betriebsmittel wird die Erfassung von Zustandsvektoren zu unterschiedlichen Zeitpunkten (mindestens zwei Zeitpunkten t1 und t2) vorgesehen, die anschließend auf Übereinstimmung verglichen werden. Der Zustandsvektor erfaßt dabei ein Abbild eines oder mehrerer Betriebsmittel für einen zu untersuchenden Prozeß. Er besteht in der bevorzugten Ausführungsform zumindest aus den Parametern "noch frei verfügbarer Speicher für den zu untersuchenden Prozess" und/oder "von dem zu untersuchenden Prozeß gesperrter Speicher". Es ist jedoch auch möglich, nur einen der beiden vorstehenden Parameter zu erfassen. Dann wird vorzugsweise nur das Abbild des gemeinsam genutzten Speicherbereichs (shared memory) über die Parameter "Adresse", "Größe" und "Prozeß-Identifikation" des shared memory erfaßt.

Damit können die Abbilder der jeweils relevanten und zu überprüfenden Betriebsmittel auf Übereinstimmung verglichen werden, um darauf aufbauend eine Aussage ableiten zu können, ob der initiale Zustand des Systems hinsichtlich der Verfügbarkeit der Betriebsmittel erhalten geblieben ist.

Wesentlich bei erfindungsgemäßen Erfassung der Zustandsvektoren ist, daß diese prozeßspezifisch sind; das heißt, sie ermöglichen einen eindeutigen Rückschluß hinsichtlich der gebundenen bzw. gesperrten Betriebsmittel auf den jeweils allokierenden Prozeß. Damit wird ausgeschlossen, daß die beiden Zustandsvektoren ein durch die Aktivität von Hintergrundprozessen 'verfälschtes' Abbild liefern. Dieses verfälschte Abbild könnte beispielsweise in folgendem Fall entstehen: Wenn der 'gekillte' Prozeß keine gesperrten Speicherbereiche hat entstehen lassen, und die beiden Zustandsvektoren von daher übereinstimmen müßten, können sie dennoch deshalb voneinander abweichen, da weitere Hintergrundprozesse aktiv sind, die ebenfalls Speicherbereiche allokieren. Dann würde sich die Summe der allokierten Speicherbereiche vor dem Crash von der Summe der allokierten Speicherbereiche nach dem Crash unterscheiden, obwohl der Crash nicht ursächlich für diese Abweichung wäre. Diese Fälle werden erfindungsgemäß dadurch berücksichtigt, indem mit den Zustandsvektoren zusätzlich erfaßt wird, von welchem Prozeß die gesperrten Betriebsmittel, insbesondere Speicherbereiche, stammen. Neben der Summe der Allokationen aller aktiven Prozesse wird zusätzlich auch ein prozeßspezifisches Abbild generiert.

Das Betriebsmittel kann jedoch nicht nur durch den Speicher ausgebildet sein, sondern umfaßt in alternativen Ausführungsformen der Erfindung die CPU (wenn sie als gemeinsames Betriebsmittel fungiert), weitere periphere Geräte, auf die zumindest ein Prozess zugreift, alle physikalischen Betriebsmittel und/oder alle virtuellen Betriebsmittel etc.

Die Erfassung der Parameter für den ersten und/oder zweiten Zustandsvektor erfolgt bevorzugterweise durch eine Abfrage eines Dienstes des Betriebssystems oder wird aus statistischen Daten generiert, die durch das Betriebssystem automatisch erfaßt werden.

Eine alternative Ausführungsform der Erfindung sieht vor, das Verfahren in ein Betriebssystem zu integrieren.

Eine weitere, bevorzugte Ausführungsform enthält eine graphische Oberfläche, die das Ergebnis des Zustandsvergleichs der beiden Betriebsmittel-Zustandsvektoren anzeigt. Daraufhin hat der Anwender die Möglichkeit, manuell in den Verfahrensablauf einzugreifen, um beispielsweise in vordefinierten Fällen oder Ausnahmesituationen zu bestimmen, daß nur ein Starten der Applikation ausgeführt werden soll, da z.B. die durch den 'gekillten' Prozeß entstandenen, belegten Speicherbereiche so klein sind, daß sie einen Neustart des gesamten Systems nicht rechtfertigen würden.

Alternativ ist es vorgesehen, das erfindungsgemäße Verfahren in einer übergeordneten Routine zu implementieren, dessen Aufgabe die Speicherverwaltung ist.

Zusätzliche, vorteilhafte Ausführungsformen ergeben sich aus den Unteransprüchen.
Weitere Vorteile der Erfindung und besondere Ausführungsformen mit deren Merkmalen sind in der nachfolgenden detaillierten Figurenbeschreibung dargestellt.
Darin zeigt:
Fig. 1 ein Ablaufdiagramm einer Ausführungsform der vorliegenden Erfindung,
Fig. 2 eine schematische Darstellung von Bestandteilen eines Computersystems gemäß der Erfindung.

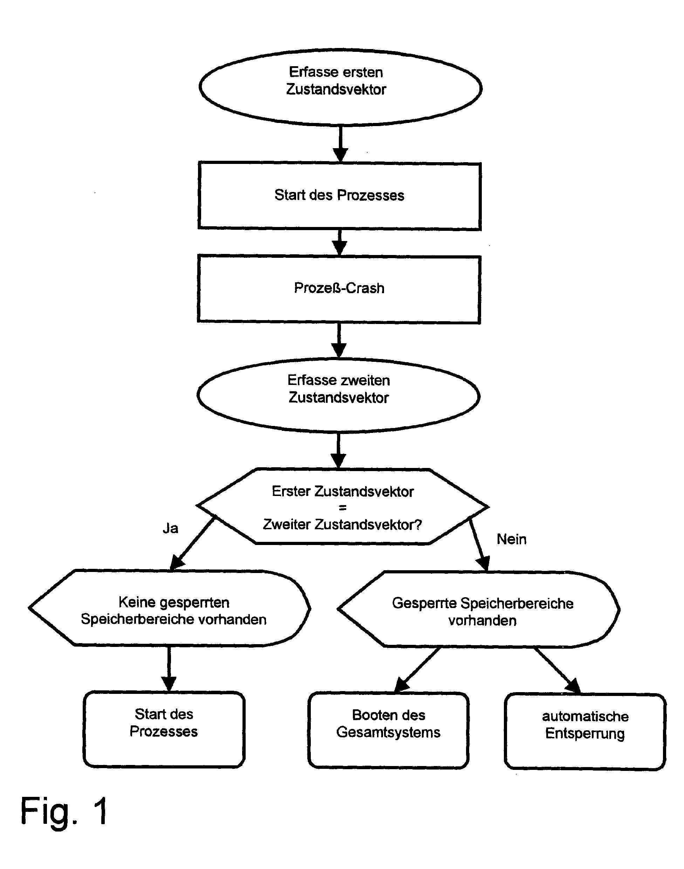

Im folgenden wird einleitend kurz der grundlegende Ablauf des erfindungsgemäßen Verfahrens vorgestellt und anschließend - unter Bezugnahme auf Figur 1 - der Ablauf anhand einer bevorzugten Ausführungsform geschildert.

Bei einem Computersystem sind gleichzeitig mehrere Prozesse 10 - Applikationsprozesse und/oder Systemprozesse - aktiv, die auf gemeinsame Betriebsmittel 12 zugreifen. Das Betriebsmittel 12 betrifft in diesem Ausführungsbeispiel die gemeinsamen Speicherbereiche 12. Läuft ein Prozeß 10 auf einen schwerwiegenden Fehler, führt dies zu einem Abbruch des Prozesses 10 bzw. zu einem Crash der Applikation. Nun gilt es zu entscheiden, ob ein Starten des Prozesses 10 ausreichend ist, um alle von diesem Prozeß 10 belegten Betriebsmittel 12 wieder frei zu geben oder ob andernfalls ein kompletter Neustart des gesamten Systems notwendig wird.

Dazu wird erfindungsgemäß, wie in Figur 1 dargestellt, vor dem Start des Prozesses 10 - zum Zeitpunkt t1 - ein erster Zustandsvektor 14 erfaßt. Der erste Zustandsvektor 14 umfaßt folgende Parameter 18 für den von dem Prozeß 10 allokierten Speicher 12: eine Adresse des Speichers 12, seine Größe und von welchem Prozeß 10 dieser Speicherbereich angelegt worden ist.

Anschließend wird der Prozeß 10 gestartet. Der Prozeß 10 läuft in der Folgezeit auf einen schwerwiegenden Fehler und wird abgebrochen: ein Crash der Applikation erfolgt.

Daraufhin wird - zum Zeitpunkt t2 - ein zweiter Zustandsvektor 16 erfaßt, der den Zustand der Betriebsmittel, insbesondere des Speichers 12, nach dem Abbruch des Prozesses 10 bezeichnen soll. Er gibt ebenfalls Aufschluß über die Anzahl bzw. Größe der frei verfügbaren Speicherbereiche und der allokierten Speicherbereiche von den zum Zeitpunkt t2 aktiven Prozessen.

Anschließend können die beiden Zustandsvektoren 14, 16 auf Übereinstimmung verglichen werden. Ist diese gegeben, so ist der Rückschluß möglich, daß der Abbruch der Applikation nichts an dem initialen Zustand des Speichers 12 (vor dem Start der Applikation) geändert hat. Somit ist es ausreichend, die Applikation neu zu starten, ohne das Risiko eines fehl-allokierten Speichers in Kauf nehmen zu müssen. In diesem Fall kann entweder automatisch oder nach Verarbeitung einer interaktiven Benutzerbestätigung der Start der Applikation veranlaßt werden.
Liegt andernfalls eine Abweichung der beiden Zustandsvektoren 14, 16 vor, so sind immer noch Speicherbereiche von der Applikation allokiert, die aber von dieser Applikation nicht mehr benötigt werden und für andere Prozesse nicht frei zuteilbar sind. Dieses Ressourcenproblem muß bereinigt werden, da es ansonsten zu schweren Folgefehlern kommen kann. Nun besteht eine Alternative darin, nur den Status des Systems hinsichtlich der Betriebsmittel auszugeben und dem Benutzer die Wahl für das weitere Vorgehen zu belassen. Eine weitere Möglichkeit liegt darin, automatisch oder ebenfalls nach Verarbeitung einer interaktiven Benutzereingabe entweder einen Shut-Down aller bestehenden weiteren Prozesse auszuführen, um danach das komplette System neu zu booten oder vorbestimmte Repair-Maßnahmen zu ergreifen, die die gelockten Speicherbereiche wieder entsperren. Hier sind beispielsweise Ansätze, die aus der sogenannten Garbage Collection bekannt sind, einsetzbar.

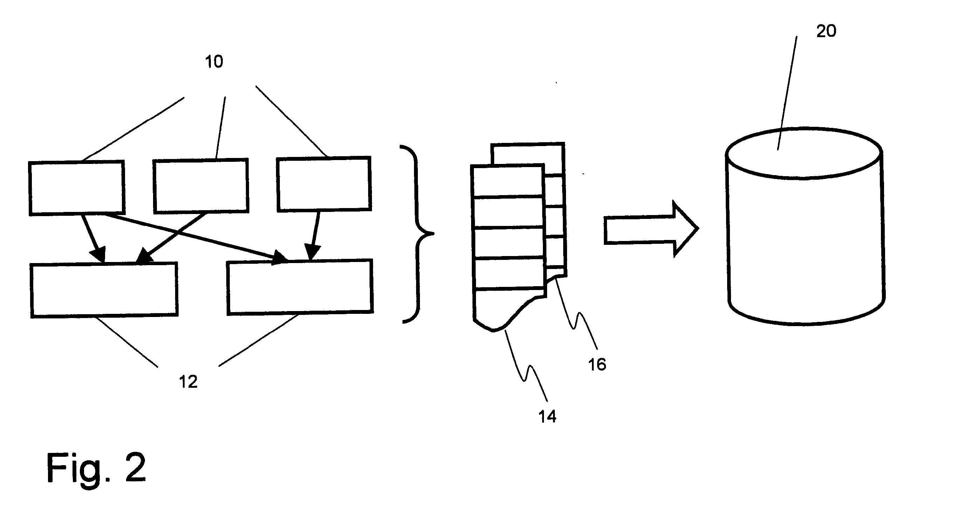

Wie in Figur 2 dargestellt, greifen mehrere Prozesse 10 auf verschiedene Betriebsmittel, insbesondere den Speicher 12, zu. Je nach Zustand des Systems werden zu unterschiedlichen Zeitpunkten Zustandsvektoren 14, 16 generiert, die für jeden Prozeß spezifisch den Betriebsmittelstatus festlegen. Die Daten dieser Zustandsvektoren 14, 16 werden erfindungsgemäß einer Betriebsmittel-Check-Einrichtung 20 zugeführt, die analysiert, ob der Absturz des Prozesses 10 nicht-zuteilbare Betriebsmittel 10 hat entstehen lassen.
Weiterhin ist es möglich, die Daten der Betriebsmittel-Check-Einrichtung 20 einer Einrichtung (nicht dargestellt) zuzuführen, die die gesperrten Speicherbereiche 12 automatisch findet und wieder freigibt bzw. entsperrt.

Bei dem Speicher 12 kann es sich um einen virtuellen und/oder physikalischen Speicher und/oder einen Arbeitsspeicher und/oder einen Hintergrundspeicher und/oder um andere Teile des Adreßraumes handeln.

In einer vorteilhaften Ausführungsform der Erfindung werden mit den Zustandsvektoren 14, 16 auch die Art des Zugriffes auf den Speicher 12 (lesend, schreibend, ausführend) und/oder noch weitere Zusatzinformationen erfaßt.

## Patentansprüche

1. Verfahren zur Ermittlung einer Zuteilbarkeit von zumindest einem Betriebsmittel (12) eines Computersystems nach Stillstand zumindest eines Prozesses (10), der auf das Betriebsmittel (12) des Systems zugreift mit folgenden Schritten:
- Ermitteln eines ersten Zustandsvektors (14) des Betriebsmittels (12) vor Inbetriebnahme des Prozesses (10)
- Ermitteln eines zweiten Zustandsvektors (16) des Betriebsmittels (12) nach dem Stillstand des Prozesses (10),
- Ermittlung, ob durch den Stillstand des Prozesses (10) nicht zuteilbare Betriebsmittel (12) entstanden sind, indem die beiden Zustandsvektoren (14, 16) auf Abweichungen verglichen werden.

2. Verfahren nach Anspruch 1,
**dadurch gekennzeichnet, daß**
das Betriebsmittel (12) ein gemeinsames Betriebsmittel ist.

3. Verfahren nach mindestens einem der vorstehenden Ansprüche,
**dadurch gekennzeichnet, daß**
das Betriebsmittel (12) ein Speicher ist.

4. Verfahren nach mindestens einem der vorstehenden Ansprüche,
**dadurch gekennzeichnet, daß**
der Prozeß (10) ein Benutzerprozeß ist.

5. Verfahren nach mindestens einem der vorstehenden Ansprüche,
**dadurch gekennzeichnet, daß**
der Stillstand durch einen Abbruch des Prozesses (10), insbesondere durch einen unbeabsichtigten Abbruch, entsteht.

6. Verfahren nach mindestens einem der vorstehenden Ansprüche,
**dadurch gekennzeichnet, daß**
die beiden Zustandsvektoren (14, 16) jeweils mehrere Parameter (18) umfassen, die die Zuteilbarkeit zumindest eines Betriebsmittels (12) betreffen.

7. Verfahren nach mindestens einem der vorstehenden Ansprüche,
**dadurch gekennzeichnet, daß**
daß die Zustandsvektoren (14, 16) zumindest aus folgenden Parametern (18) bestehen: Umfang bzw. Größe und/oder Adresse des belegten Betriebsmittels (12), insbesondere Speichers, und/oder Prozeß-Identifikation des Prozesses (10), der auf das Betriebsmittel (12) zugreift und/oder Angabe der frei verfügbaren bzw. zuteilbaren Betriebsmittel.

8. Verfahren nach mindestens einem der vorstehenden Ansprüche,
**dadurch gekennzeichnet, daß**
der erste Zustandsvektor (14) und/oder der zweite Zustandsvektor (16) unter anderem den Prozeß (10) erfaßt, der auf das Betriebsmittel (12) zugreift, insbesondere durch eine Prozeß-Identifikation.

9. Verfahren nach mindestens einem der vorstehenden Ansprüche,
**dadurch gekennzeichnet, daß**
das Verfahren alle physikalischen und/oder virtuellen Betriebsmittel (12) berücksichtigt.

10. Verfahren nach mindestens einem der vorstehenden Ansprüche 1 mit 8,
**dadurch gekennzeichnet, daß**
ein Teil der Betriebsmittel (12) berücksichtigt wird, insbesondere die gemeinsamen Betriebsmittel.

11. Verfahren nach mindestens einem der vorstehenden Ansprüche,
**dadurch gekennzeichnet, daß**
der erste Zustandsvektor (14) und/oder der zweite Zustandsvektor (16) durch eine Abfrage eines Dienstes eines Betriebssystems erfaßt wird/werden.

12. Verwendung des Verfahrens nach mindestens einem der vorstehenden Ansprüche zur automatischen Entsperrung der Betriebsmittel (12) nach dem Abbruch des Prozesses (10), indem bei Übereinstimmung der beiden Zustandsvektoren (14, 16) der Prozeß (10) neu gebootet wird und andernfalls zumindest ein Mechanismus zur Entsperrung der Betriebsmittel (12) gestartet wird.

13. Verwendung des Verfahrens nach mindestens einem der vorstehenden Ansprüche,
**dadurch gekennzeichnet, daß**
das Verfahren in einem Betriebssystem integriert ist.

14. Computersystem, das zur Ausführung des Verfahrens nach zumindest einem der vorstehenden Ansprüche 1 mit 12 bestimmt ist mit einer Betriebsmittel-Check-Einrichtung (20), die jeweils einen Zustand der Betriebsmittel (12) vor und nach einem Abbruch eines Prozesses (10) ermittelt und erfaßt, ob durch den Abbruch nicht zuteilbare Betriebsmittel entstanden sind, indem der Zustand nach dem Abbruch mit dem Zustand vor dem Abbruch auf Abweichungen verglichen wird.

15. Computersystem nach Anspruch 14,
**dadurch gekennzeichnet, daß**
das Computersystem ein Betriebssystem ist.
